# EUROPÄISCHE PATENTSCHRIFT

(11) **EP 1 419 904 B1**
(45) Veröffentlichungstag und Bekanntmachung des Hinweises auf die Patenterteilung: **22.08.2007**
(21) Anmeldenummer: 02025378.7
(22) Anmeldetag: 14.11.2002
(51) Int. Cl.: B60C 11/00, B60C 1/00

(54) **Zweiradluftreifen, insbesondere Fahrradluftreifen**
Pneumatic tyre for two-wheeled vehicle, in particular for bicycle
Bandage pneumatique pour deux-roues, en particulier pour bicyclette

(43) Veröffentlichungstag der Anmeldung: 19.05.2004
(73) Patentinhaber: Continental Aktiengesellschaft, 30165 Hannover (DE)
(72) Erfinder: Ernst, Helmut, 35099 Burgwald-Bottendorf (DE); Bornmann, Harald, 35114 Haina (DE); Becker, Jürgen, 34519 Diemelsee (DE)

(56) Entgegenhaltungen:
- EP-A- 0 117 904
- EP-A- 0 257 269
- US-A- 5 851 321
- PATENT ABSTRACTS OF JAPAN vol. 014, no. 206 (M-0967), 26. April 1990 (1990-04-26) -& JP 02 045202 A (SUMITOMO RUBBER IND LTD), 15. Februar 1990 (1990-02-15)
- PATENT ABSTRACTS OF JAPAN vol. 017, no. 123 (M-1380), 15. März 1993 (1993-03-15) -& JP 04 306102 A (TOYO TIRE & RUBBER CO LTD), 28. Oktober 1992 (1992-10-28)

## Beschreibung

Die Erfindung betrifft einen Zweiradluftreifen, insbesondere Fahrradluftreifen, der zumindest eine gummierte Karkasse, die durch Umschlingen von Wulstkernen in den Wülsten verankert ist, einen Laufstreifen aus Gummi und gegebenenfalls Seitenwandgummischichten aufweist.

Zweiradluftreifen der eingangs genannten Art mit Seitenwandgummischichten sind z. B. aus der EP-A-0 117 904 bekannt. Es sind auch Fahrradreifen auf dem Markt erhältlich, bei denen auf eine Seitenwandgummischicht aus Gewichtsgründen verzichtet wird und bei denen die gummierte Karkasse die Seitenwand bildet.

Für die Herstellung von Zweiradluftreifen werden unterschiedlichste Kautschukmischungen eingesetzt, wobei die Fahreigenschaften des Reifens in einem großen Umfang von der Kautschukzusammensetzung des Laufstreifens abhängig sind. So soll der Reifen einen geringen Abrieb und einen geringen Rollwiderstand sowie eine sehr gute Haftung auf nassem und trockenem Untergrund aufweisen. Außerdem soll der Reifen eine hohe Lebensdauer haben. Die Lebensdauer wird dabei nicht nur durch den Abrieb bestimmt, sondern auch Alterungsrisse, die durch die Einwirkung von Ozon, Hitze und UV-Strahlung entstehen, tragen zu einem frühzeitigeren Ausfall des Reifens bei. Fertigungs- und nutzungsbedingt treten diese Alterungsrisse bei Fahrradreifen besonders am Profilrillengrund sowie an den Seitenwänden (Flankenbereich) auf, da dort die größte Walkarbeit auftritt. In den Profilstollen treten dagegen im Allgemeinen kaum Risse auf.

Um all den gewünschten Eigenschaften gerecht zu werden, werden Zweiradluftreifen im Laufstreifenbereich mit Mischungen versehen, die einen Kompromiss zwischen Rissfestigkeit und Fahreigenschaften, wie Rollwiderstand und Nass- und Trockenhaftung, bieten, da Mischungen, die besonders gut im Rollwiderstand und in der Nass- und Trockenhaftung sind, in der Regel keine gute Rissfestigkeit aufweisen und umgekehrt.

Aus der DE-C-196 53 371 sind Fahrradreifen mit hellen, d. h. nicht schwarzen, Laufstreifen bekannt, die einen geringen Abrieb, eine gute Haftung auf nasser und trockener Fahrbahn und gleichzeitig eine hervorragende Alterungsbeständigkeit aufweisen. Der Laufstreifen besteht dabei aus einer einzigen Mischung, die 20 bis 50 phr lösungspolymerisiertes Styrol-Butadien-Copolymer, 20 bis 40 phr Ethylen-Propylen-Dienkautschuk und/oder Butylen-Styrol-Copolymer, 10 bis 60 phr Naturkautschuk, 30 bis 70 phr Kieselsäure und 1,9 bis 4,4 phr Aktivierungsmittel sowie weitere übliche Füll- und Zusatzstoffe enthält. Auch diese Mischung kann - obwohl auf sehr hohem Niveau - nur einen Kompromiss zwischen Rissfestigkeit und Fahreigenschaften bieten.

Zur Vermeidung von Rissen im Seitenwandbereich von Fahrradreifen, die durch Versprödung aufgrund von Weichmacherdiffusion hervorgerufen werden, wird in der JP-A-1111503 vorgeschlagen, den Laufstreifen aus einem Mittelbereich und Seitenbereichen bestehen zu lassen, wobei für den Mittelbereich und für die Seitenbereiche unterschiedlicher Kautschukmischungen mit unterschiedlichen Weichmachergehalten eingesetzt werden.

Aus der JP-A-02 045202 ist es bekannt, bei PKW-Reifen den Laufstreifen und nur den radial äußeren Teil der Seitenwände mit einer dünnen Außengummischicht mit hoher Rissbeständigkeit zu versehen.

Der vorliegenden Erfindung liegt nun die Aufgabe zu Grunde, Zweiradluftreifen, insbesondere Fahrradluftreifen, bereitzustellen, die eine besonders hohe Rissfestigkeit und damit verbunden eine hohe Lebensdauer aufweisen, ohne gleichzeitig Einbußen in den Fahreigenschaften, wie Rollwiderstand und Nass-und Trockenhaftung, hinnehmen zu müssen.

Gelöst wird diese Aufgabe erfindungsgemäß dadurch, dass der Reifen im Neuzustand auf der Außenseite eine Schicht (Covering), insbesondere eine Gummischicht, mit einer Schichtdicke ≤ 0,5 mm aufweist, die eine hohe Rissbeständigkeit besitzt, wobei sich die Schicht ausgehend von den Wülsten über die Seitenwandgummischichten der gesamten Seitenwände und den Laufstreifen erstreckt.

Der Reifen weist demnach im Laufstreifenbereich zwei verschiedene Gummimischungen auf. Im Fahrbetrieb reibt sich nach kurzer Zeit die dünne Gummischicht nur auf den Profilstollen ab und die darunterliegende herkömmliche Laufstreifenmischung kommt dadurch wieder in Kontakt mit der Fahrbahn.

Der Grundgedanke der Erfindung ist darin zu sehen, dass die Bereiche des Reifens, die besonders hohen Belastungen durch Walkarbeit ausgesetzt sind (Profilrillengrund) und die daher zu Rissen nach Alterung unter Ozon-, Wärme- und UV-Lichteinfluss neigen, durch die Anwesenheit einer dünnen besonders rissbeständigen Gummischicht während des Reifenlebens geschützt sind, während die mit der Fahrbahn in Berührung kommenden Flächen des Laufstreifens eine herkömmliche Laufstreifenmischung aufweisen, die hinsichtlich ihrer Eigenschaften wie Rollwiderstand, Nass- und Trockengriff optimiert sein kann, ohne dass gleichzeitig auf eine hohe Rissbeständigkeit geachtet werden muss. Insgesamt vereint der erfindungsgemäße Zweiradluftreifen die Eigenschaften einer rissbeständigen Mischung als Deckschicht mit den positiven Eigenschaften einer Laufstreifenmischung (Haftung, Rollwiderstand).

Bei der Schicht kann es sich um eine Schicht aus Gummi oder aus einem gummiähnlichen Material, wie z. B. einem thermoplastischen Elastomer, oder aus thermoplastischem Material handeln. Gummischichten sind bevorzugt, da sie sich gut mit den darunterliegenden Mischungsschichten z. B. bei der Vulkanisation fest verbinden lassen.

Die Schicht erstreckt sich ausgehend von den Wülsten über die Seitenwandgummischichten der gesamten Seitenwände und den Laufstreifen. Auf diese Weise werden auch die gesamten Seitenwände, die besonders dem UV-Licht ausgesetzt sind und die der Walkarbeit unterliegen, durch die Schicht vor Rissen geschützt. Dieses bietet außerdem den Vorteil, dass ein derartiger Reifen einfach hergestellt werden kann. Bei der Herstellung der eigentlichen Laufstreifen- und Seitenwandrohlinge, die mittels Extrusion erzeugt werden, kann z. B. eine dünne Kautschukmischungsschicht, die nach der Vulkanisation die dünne Deckschicht bildet, aufdoubliert werden. Die Schicht kann aber auch durch Sprühen oder Streichen von z. B. einer Lösung der Kautschukmischung in organischem Lösungsmittel aufgebracht werden.

Die Schicht auf der Außenseite weist bevorzugt eine Schichtdicke von 0,15 bis 0,3 mm auf. Es hat sich herausgestellt, dass bei diesen Schichtdicken der beste Schutz vor Rissen erzielt wird, ohne dabei andere Reifeneigenschaften negativ zu beeinflussen. Diese Schichtdicken lassen sich verfahrenstechnisch gut herstellen.

Handelt sich bei der Schicht auf der Außenseite um eine Gummischicht, kann diese Gummischicht auf verschiedenen Kautschukmischungen basieren, die als Vulkanisate eine hohe Rissbständigkeit aufweisen. So kann die Kautschukmischung z. B. Ethylen-Propylen-Dienkautschuk (EPDM) oder Copolymere aus Isobutylen und para-Methylstyrol, die gegebenenfalls halogeniert sind (z. B. EXXPRO^{®} der Firma Exxon Chemical), als Kautschuke enthalten. Diese Kautschuktypen zeichnen sich durch eine hohe Rissbständigkeit aus.
Bevorzugt basiert die äußere Gummischicht auf einer vulkanisierten Kautschukmischung, die
30 bis 60 phr Ethylen-Propylen-Dienkautschuk (EPDM),
40 bis 70 phr Naturkautschuk (NR),
0 bis 20 phr Polybutadien (BR)
und weitere übliche Zusatzstoffe enthält. Die Anteile der Kautschuke addieren sich in der Mischung zu hundert. Anstelle des EPDM kann in dieser Mischung auch ein Copolymer aus Isobutylen und para-Methylstyrol, das gegebenenfalls halogeniert ist, oder ein Verschnitt aus EPDM und dem Copolymer verwendet werden.

Die in dieser Schrift verwendete Angabe phr (parts per hundred parts of rubber by weight) ist die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Derartige Kautschukmischungen mit einem hohen EPDM-Anteil zeichnen sich durch eine hohe Rissresistenz bei Ozon- und UV-Licht-Alterung aus. Verwendet man weniger als 30 phr EPDM ist der Schutz gegen Risse nicht mehr in vollem Umfang gewährleistet. Bei deutlich mehr als 60 phr werden die dynamischen Eigenschaften wie Dehnung, Weiterreißfestigkeit und Spannwert beeinträchtigt. Auch die Mischbarkeit wird bei steigenden Mengen über 60 phr EPDM problematisch. Da es sich bei EPDM um einen relativ teuren Synthesekautschuk handelt, bietet die Verwendung als dünne Deckschicht den Vorteil, dass nur geringe Mengen des teuren Kautschuks im Massenprodukt eingesetzt werden und der Preis des Reifens dadurch gering gehalten werden kann.

Die Kautschukmischung kann übliche Zusatzstoffe in üblichen Gewichtsteilen enthalten. Zu diesen Zusatzstoffen zählen z. B. Füllstoffe (z. B. Ruß, Kieselsäure), Farbpigmente, Alterungsschutzmittel, Verarbeitungshilfsmittel, Weichmacher, Vernetzungsmittel (z. B. Schwefel oder Peroxide) und Vulkanisationsbeschleuniger.
Die Herstellung der erfindungsgemäßen Kautschukmischung erfolgt auf herkömmliche Art und Weise in einer oder mehreren Mischstufen.

Gemäß einer vorteilhaften Weiterbildung der Erfindung nach Anspruch 5 enthält die Kautschukmischung für die Gummischicht nicht oder schwach verfärbende oder gar keine Alterungsschutzmittel. Nicht oder schwach verfärbende Alterungsschutzmittel, wie z. B. 2,2'-Methylen-bis-(4-methyl-6-tert.butylphenol) (BPH), substituiertes Phenol (DS), styrolysiertes Phenol (SPH) oder 2,2,4-Trimethyl-1,2-dihydrochinolin (TMQ), weisen in der Regel im Vergleich zu verfärbenden Alterungsschutzmitteln (z. B. aromatischen Aminen) eine schlechtere Wirksamkeit beim Schutz vor Rissen durch Ozon-, UV-Licht- und Wärmealterung auf. Bei einer Mischung gemäß Anspruch 5 mit hohem EPDM-Anteil werden keine Alterungsschutzmittel benötigt oder es reichen nicht oder schwach verfärbende Alterungsschutzmittel aus um eine ausreichende Rissbeständigkeit der Gummischicht zu gewährleisten.

Die Verwendung von keinen oder nicht oder schwach verfärbenden Alterungschutzmitteln bietet außerdem den Vorteil, dass die Gummischicht farbig ausgebildet oder mit farbigen Applikationen, z. B. Labels, oder Reflexstreifen versehen werden kann, ohne dass unschöne Verfärbungen durch verfärbende Alterungsschutzmittel auftreten. Es wird auf diese Weise den gewünschten optischen Eigenschaften des Zweiradluftreifens Rechnung getragen. Insbesondere bei Fahrradreifen sind langlebige, optisch ansprechende Ausführungen, die zudem ausgezeichnete Fahreigenschaften aufweisen sollen, bei den Kunden gefragt.

Die Gummischicht kann die gleich Farbe aufweisen wie die darunterliegende Laufstreifenmischung. Es ist aber auch möglich, dass sich Gummischicht und Laufstreifenmischung farblich unterscheiden. Wird die Gummischicht in einer anderen Farbe ausgebildet als die darunterliegende Laufstreifenmischung, wird es für den Nutzer sichtbar, wenn die Gummischicht nach hoher Lebensdauer kleinste Risse aufweist, da dann die Laufstreifenmischung hindurchschaut.

Besonders vorteilhaft ist es, wenn der Laufstreifen des Zweiradluftreifens auf einer vulkanisierten Kautschukmischung basiert, die als Kautschuke nur Naturkautschuk und/oder Polybutadien enthält. Mischungen auf der Basis dieser Kautschuke weisen nach der Vulkanisation eine besonders gute Haftung auf nasser und trockener Fahrbahn bei gleichzeitig niedrigem Rollwiderstand auf. Zudem sind diese Kautschuktypen preiswert.

Auch bei der Kautschukmischung für den Laufstreifen kann man auf die hinsichtlich der Ozon-, UV-Licht- und Wärmealterung aktiveren, aber verfärbenden Alterungsschutzmittel verzichten, da den Schutz vor durch derartige Alterung hervorgerufene Risse die den Laufstreifen abdeckende Schicht übernimmt.

Der erfindungsgemäße Zweiradluftreifen kann nach dem Fachmann bekannten Verfahren hergestellt werden, wobei die Schicht auf der Außenseite vor oder nach der Vulkanisation durch unterschiedlichste bekannte Auftrags- und Beschichtungsverfahren aufgebracht werden kann.

Nachfolgend wird die Erfindung anhand eines Ausführungsbeispiels im Zusammenhang mit der nachstehenden Figur näher erläutert, ohne jedoch auf dieses Beispiel beschränkt zu sein.

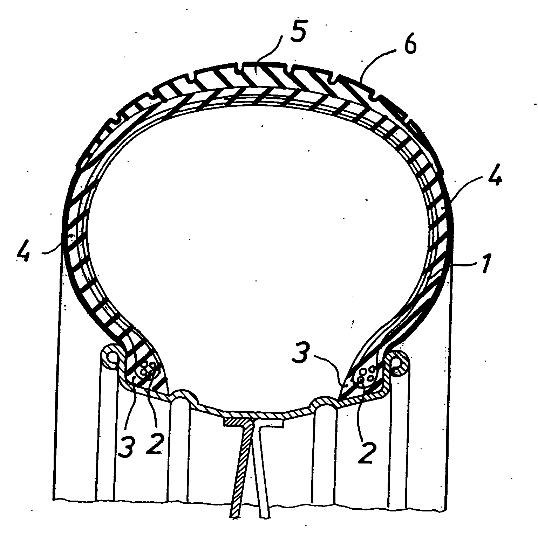

Die einzige Figur zeigt schematisch einen Fahrradreifen in einem radialen Teilschnitt im Neuzustand.

Der Fahrradreifen gemäß der Figur weist eine Diagonalkarkasse 1 aus zwei Gewebelagen auf, die durch Umschlingen von Drahtwulstkernen 2 in den Reifenwülsten 3 verankert sind. Seitlich außen befindet sich an den Reifenseitenwänden eine Seitenwandgummischicht 4, die einteilig von Wulst 3 zu Wulst 3 reichen kann. Ferner weist der Reifen einen Laufstreifen 5 aus Gummi auf. Der Reifen besitzt im Neuzustand eine Gummischicht 6, die sich auf der Außenseite des Reifens ausgehend von den Wülsten 3 über die Seitenwandgummischicht 4 und den Laufstreifen 5 erstreckt. Die Gummischicht 6 weist eine Schichtdicke von weniger als 0,5 mm auf und besitzt eine hohe Rissbeständigkeit. Im Fahrbetrieb wird die Gummischicht 6 radial außen auf den Profilstollen durch den Kontakt mit dem Untergrund schnell abgerieben, aber die für Risse besonders anfälligen Profilrillengründe und die Seitenwände bleiben weiterhin durch die Gummischicht 6 geschützt.

Geeignete Kautschukmischungen für die Gummischicht 6 mit guter Rissbeständigkeit und für den Laufstreifen 5 mit gutem Rollwiderstand und guter Nass- und Trockenhaftung sind nachstehend in Tab. 1 aufgeführt.

**Tab. 1**

| **Mischung für Gummischicht 6** | **Mischung für Laufstreifen 5** |
|---|---|
| 45 phr NR | 80 phr NR |
| 55 phr EPDM | 20 phr BR |
| 6,5 phr Verarbeitungshilfen | 6,5 phr Verarbeitungshilfen |
| 2 phr Alterungsschutzmittel (schwach verfärbend) | 2 phr Alterungsschutzmittel (schwach verfärbend) |
| 50 phr Füllstoffe | 65 phr Füllstoffe |
| 9 phr Weichmacher | 10 phr Weichmacher |
| 2 phr Schwefel | 2,3 phr Schwefel |
| 1,95 phr Beschleuniger | 1,8 phr Beschleuniger |

Es wurden erfindungsgemäße Fahrradreifen aus der Mischung für die Außengummischicht gemäß Tab. 1 und einem Laufstreifen mit einer Mischung gemäß Tab. 1 hergestellt, wobei bei der Herstellung auf den unvulkanisierten Laufstreifen eine 0,5 mm dicke Schicht aus der Mischung für die Außenschicht aufdoubliert wurde. Nach der Vulkanisation in der Vulkanisationspresse wies der fertige Reifen eine Außenschicht auf, die eine Schichtdicke von 0,3 bis 0,5 mm hatte. Als Vergleich dienten Fahrradreifen mit der gleichen Laufstreifenmischung, aber ohne die erfindungsgemäße Außenschicht. Bei Tests auf einem Außenprüfstand (dynamischer Risslauf) zeigten die Vergleichsreifen ohne Außenschicht nach 48 h (ca. 2500 km) bereits deutliche Risse an den Flanken und im Profilrillengrund. Die erfindungsgemäßen Reifen mit der Außenschicht waren nach 100 h (ca. 5000 km) noch rissfrei.
Bei Tests unter einer UV-Lampe (statisch) zeigten Reifenabschnitte ohne zusätzliche Außenschicht nach 72 h starke Risse, während die erfindungsgemäßen Reifen noch rissfrei waren.

## Patentansprüche

1. Zweiradluftreifen, insbesondere Fahrradluftreifen, der zumindest eine gummierte Karkasse (1), die durch Umschlingen von Wulstkernen (2) in den Wülsten (3) verankert ist, einen Laufstreifen (5) aus Gummi und gegebenenfalls Seitenwandgummischichten (4) aufweist,
**dadurch gekennzeichnet,**
**dass** der Reifen im Neuzustand auf der Außenseite eine Schicht (6) mit einer Schichtdicke ≤ 0,5 mm aufweist, die eine hohe Rissbeständigkeit besitzt, wobei sich die Schicht (6) ausgehend von den Wülsten (3) über die Seitenwandgummischichten der gesamten Seitenwände und den Laufstreifen (5) erstreckt.

2. Zweiradluftreifen nach Anspruch 1, **dadurch gekennzeichnet, dass** die Schicht (6) eine Gummischicht ist.

3. Zweiradluftreifen nach Anspruch 1oder 2 nach zumindest einem der Ansprüche 1 bis 3, **dadurch gekennzeichnet, dass** die Schicht (6) eine Schichtdicke von 0,15 bis 0,3 mm aufweist.

4. Zweiradluftreifen nach Anspruch 2 oder 3, **dadurch gekennzeichnet, dass** die Gummischicht (6) auf einer vulkanisierten Kautschukmischung basiert, die
30 bis 60 phr Ethylen-Propylen-Dienkautschuk (EPDM),
40 bis 70 phr Naturkautschuk (NR),
0 bis 20 phr Polybutadien (BR)
und weitere übliche Zusatzstoffe enthält.

5. Zweiradluftreifen nach Anspruch 4 **dadurch gekennzeichnet, dass** die Kautschukmischung für die Gummischicht (6) nicht oder schwach verfärbende oder keine Alterungsschutzmittel enthält.

6. Zweiradluftreifen nach zumindest einem der Ansprüche 1 bis 5, **dadurch gekennzeichnet, dass** der Laufstreifen (5) auf einer vulkanisierten Kautschukmischung basiert, die als Kautschuke 70 bis 100 phr Naturkautschuk und 0 bis 30 phr Polybutadien enthält.

## Claims

1. Two-wheeler pneumatic tyre, in particular bicycle pneumatic tyre, comprising at least a rubberized carcase (1) folded around cores (2) in the beads (3), a tread strip (5) of rubber and if appropriate sidewall rubber layers (4),
**characterized in that**
the tyre when new has on its outside surface a layer (6) ≤0.5 mm thick which has a high cracking resistance, the layer (6) extending from the beads (3) over the sidewall rubber layers of the entire sidewalls and the tread strip (5).

2. Two-wheeler pneumatic tyre according to Claim 1, **characterized in that** the layer (6) is a rubber layer.

3. Two-wheeler pneumatic tyre according to Claim 1 or 2, **characterized in that** the layer (6) is 0.15 to 0.3 mm thick.

4. Two-wheeler pneumatic tyre according to Claim 2 or 3, **characterized in that** the rubber layer (6) is based on a vulcanized rubber mixture containing
30 to 60 phr of ethylene-propylene-diene monomer (EPDM) rubber,
40 to 70 phr of natural rubber (NR),
0 to 20 phr of polybutadiene (BR)
and further customary additives.

5. Two-wheeler pneumatic tyre according to Claim 4, **characterized in that** the rubber mixture for the rubber layer (6) contains no ageing control agents or contains ageing control agents which discolour little if at all.

6. Two-wheeler pneumatic tyre according to at least one of the Claims 1 to 5, **characterized in that** the tread strip (5) is based on a vulcanized rubber mixture containing 70 to 100 phr of natural rubber and 0 to 30 phr of polybutadiene as rubbers.

## Revendications

1. Bandage pneumatique pour deux-roues, en particulier bandage pneumatique pour bicyclette, qui présente au moins une carcasse (1) caoutchoutée ancrée dans les bourrelets (3) par enroulement d'âmes (2) de bourrelet, une bande de roulement (5) en caoutchouc et éventuellement des couches (4) de caoutchouc sur les parois latérales,
**caractérisé en ce qu'**à l'état neuf, le bandage présente sur le côté extérieur une couche (6) d'une épaisseur ≤0,5 mm qui présente une grande résistance à la déchirure, la couche (6) partant des bourrelets (3) pour s'étendre au-dessus des couches de caoutchouc de la totalité des parois latérales et sur la bande de roulement (5).

2. Bandage pneumatique pour deux-roues selon la revendication 1, **caractérisé en ce que** la couche (6) est une couche de caoutchouc.

3. Bandage pneumatique pour deux-roues selon la revendication 1 ou 2, **caractérisé en ce que** la couche (6) présente une épaisseur de 0,15 à 0,3 mm.

4. Bandage pneumatique pour deux-roues selon la revendication 2 ou 3, **caractérisé en ce que** la couche de caoutchouc (6) est à base d'un mélange de caoutchoucs vulcanisé qui contient de 30 à 60 phr de caoutchouc à l'éthylène, au propylène et au diène (EPDM), de 40 à 70 phr de caoutchouc naturel (NR), de 0 à 20 phr de polybutadiène (BR) et d'autres additifs habituels.

5. Bandage pneumatique pour deux-roues selon la revendication 4, **caractérisé en ce que** le mélange de caoutchoucs prévu pour la couche de caoutchouc (6) ne contient pas d'agents de vieillissement qui ne se décolorent pas ou ne se décolorent que faiblement ou ne contient pas d'agents de protection contre le vieillissement.

6. Bandage pneumatique pour deux-roues selon au moins l'une des revendications 1 à 5, **caractérisé en ce que** la bande de roulement (5) est à base d'un mélange de caoutchoucs vulcanisé qui contient comme caoutchoucs de 70 à 100 phr de caoutchouc naturel et de 0 à 30 phr de polybutadiène.
